# FASCICULE DE BREVET EUROPEEN

(11) **EP 3 902 644 B1**
(45) Date de publication et mention de la délivrance du brevet: **24.04.2024**
(21) Numéro de dépôt: 19845711.1
(22) Date de dépôt: 18.12.2019
(51) Int. Cl.: B21F 15/06, B29D 30/48, B21F 37/00

(54) **INSTALLATION DE FABRICATION DE TRINGLES POUR PNEUMATIQUES COMPRENANT UN POSTE DE SERTISSAGE POURVU D'UN SOUS-ENSEMBLE DE PRÉPARATION AUTOMATIQUE DE MANCHONS DE SERTISSAGE**
EINHEIT ZUR HERSTELLUNG VON WULSTEN FÜR REIFEN MIT EINER CRIMPSTATION, DIE MIT EINER UNTERBAUGRUPPE ZUR AUTOMATISCHEN HERSTELLUNG VON CRIMPHÜLSEN AUSGESTATTET IST
UNIT FOR MANUFACTURING BEADS FOR TYRES, COMPRISING A CRIMPING STATION PROVIDED WITH A SUB-ASSEMBLY FOR AUTOMATICALLY PREPARING CRIMPING SLEEVES

(30) Priorité: 27.12.2018 FR 1874245; 31.01.2019 FR 1900959
(43) Date de publication de la demande: 03.11.2021
(73) Titulaire: COMPAGNIE GENERALE DES ETABLISSEMENTS MICHELIN, 63000 Clermont-Ferrand (FR)
(72) Inventeur: BERLIOUX, Loïc, 63040 Clermont-Ferrand Cedex 9 (FR); AMYOT, Christophe, 63040 Clermont-Ferrand Cedex 9 (FR)
(74) Mandataire: M.F.P. Michelin
(86) Numéro de dépôt international: PCT/FR2019/053139
(87) Numéro de publication internationale: WO 2020/136324

(56) Documents cités:
- FR-A1- 2 985 922
- JP-A- S5 634 444
- JP-A- S51 119 775
- JP-A- 2007 160 640
- JP-A- 2008 238 808
- US-A1- 2008 277 040

## Description

La présente invention concerne le domaine de la fixation de fils par sertissage, et plus particulièrement l'application du sertissage à la fabrication de tringles qui sont destinées à renforcer des bandages pneumatiques pour permettre la fixation de tels bandages pneumatiques à une jante.

Il est connu, notamment par le document JP-2005-238997, de réaliser une tringle tressée en enroulant un fil de tresse en spires hélicoïdales autour d'une âme annulaire, et en réunissant les extrémités dudit fil par un manchon serti.

Toutefois, de tels manchons présentent une forme et une mise en oeuvre complexes notamment du fait qu'ils comprennent une première partie qui doit être enfilée sur l'âme préalablement au tressage du fil de tresse sur ladite âme, et une seconde partie solidaire de la première partie, dans laquelle on doit placer les extrémités du fil de tresse et que l'on doit ensuite rabattre par sertissage sur lesdites extrémités du fil de tresse pour assurer le maintien desdites extrémités.

En outre, de tels manchons créent localement une surépaisseur de la tringle, surépaisseur qui est susceptible de favoriser une abrasion du bandage pneumatique dans laquelle la tringle est intégrée, ou de créer un certain balourd dans ledit bandage pneumatique. Les documents JP S51 119775, FR 298 59 22 et JP 2007 160640 décrivent quant à eux d'autres formes de réalisation de tringles utilisant, de manière analogue, des manchons sertis.

Les objets assignés à l'invention visent par conséquent à remédier aux inconvénients susmentionnés et proposer un nouveau type de poste de sertissage, et plus globalement un nouveau type d'installation de fabrication de tringles, qui permette une production de tringles qui soit automatisée, fiable, et simple.

Les objets assignés à l'invention sont atteints au moyen d'un poste de sertissage comprenant une pince de sertissage agencée pour venir sertir un manchon autour d'un premier tronçon d'extrémité d'un fil et d'un second tronçon d'extrémité d'un fil afin de réunir et fixer l'un à l'autre lesdits premier et second tronçons d'extrémité, ledit poste de sertissage étant caractérisé en ce qu'il comprend un sous-ensemble de préparation de manchon qui comporte un dispositif d'alimentation qui fournit un ruban métallique et qui achemine ledit ruban jusqu'à un dispositif de conformation agencé pour déformer plastiquement ledit ruban afin de conférer audit ruban une section transverse incurvée concave, de sorte à obtenir un ruban préformé, puis jusqu'à un dispositif de coupe qui est agencé pour sectionner un tronçon de longueur dudit ruban préformé afin d'obtenir une préforme de manchon qu'un outil de chargement vient placer au sein de la pince de sertissage, de sorte que ladite pince de sertissage puisse venir appliquer et refermer par déformation plastique ladite préforme de manchon en un manchon autour des premier et second tronçons d'extrémité de fil.

Avantageusement, l'invention permet de mettre en oeuvre des manchons légers, de forme simple, produits in situ, directement sur le poste de sertissage, et de réapprovisionner automatiquement la pince de sertissage de manière parfaitement maîtrisée et reproductible.

En outre, en produisant les manchons à l'unité à chaque opération de sertissage, directement sur le poste de sertissage, et ce à partir d'un ruban continu qui est facile à conditionner, à stocker et à approvisionner, on s'assure de produire les préformes de manchon juste en quantité nécessaire et suffisante pour réaliser la ou les opérations de sertissage visées, ce qui évite d'avoir à constituer ou à manipuler un stock de préformes de manchons.

Enfin, l'invention permet de produire et d'utiliser des préformes de manchons de forme très simple, et donc peu coûteuses à produire, dont la section est en forme de U et permet une mise en place facile de ladite préforme de manchon sur les tronçons de fil à assembler, ce qui permet de simplifier l'architecture et le fonctionnement du poste d'assemblage, et plus particulièrement de simplifier la cinématique de la pince de sertissage.

L'invention permet donc au poste de sertissage de gagner en compacité et en efficacité, de réduire le temps de cycle de sertissage, et de réaliser des économies de matière première.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue de face en coupe, dans un plan de coupe, ici vertical, qui contient la direction longitudinale d'extension du ruban, un exemple de réalisation de poste de sertissage selon l'invention et son sous-ensemble de préparation de manchons.

La figure 2 est une vue en perspective du poste de sertissage de la figure 1.

La figure 3 illustre, selon une vue de côté, le poste de sertissage des figures 1 et 2, et sa capacité à faire passer alternativement la pince de sertissage d'une position de rechargement dans laquelle la pince de sertissage reçoit une nouvelle préforme de manchon à une position de sertissage dans laquelle ladite pince de sertissage vient appliquer et serrer ladite préforme de manchon sur les tronçons de fil à joindre.

La figure 4 illustre, selon une vue en coupe perpendiculaire à la direction longitudinale du ruban, un dispositif de conformation du ruban apte à conformer le ruban par un laminage de forme entre deux galets conformateurs.

La figure 5 illustre, selon une vue de détail en coupe perpendiculaire à la direction longitudinale du ruban, l'entrée d'un guide de redressement qui confère un agencement rectiligne au ruban préformé.

La figure 6 illustre, selon une vue en coupe perpendiculaire à la direction longitudinale du ruban, la pince de sertissage du poste des figures 1 à 5 en position de rechargement, ainsi qu'un poinçon, ledit poinçon formant à la fois un outil de coupe qui permet de prélever une préforme de manchon dans l'extrémité du ruban préformé, et un outil de chargement capable d'amener ladite préforme de manchon jusque dans la pince de sertissage.

La figure 7 illustre, selon une vue de détail dans le même plan de coupe que la figure 6, le poinçon engageant le ruban préformé pour en détacher la préforme de manchon.

La figure 8 illustre, selon une vue de détail dans le même plan de coupe que les figures 6 et 7, la fin du mouvement du poinçon et la mise en place de la préforme de manchon au sein de la pince de sertissage.

La figure 9 illustre, selon une vue partielle en perspective, une tringle tressée obtenue en réunissant les extrémités d'un fil de tresse par un manchon, au moyen d'un poste de sertissage selon l'invention.

La présente invention concerne un poste de sertissage 1 comprenant une pince de sertissage 2 agencée pour venir sertir un manchon 3 autour d'un premier tronçon d'extrémité 5 d'un fil 4 et d'un second tronçon d'extrémité 6 d'un fil 4 afin de réunir et fixer l'un à l'autre lesdits premier et second tronçons d'extrémité 5, 6.

Le poste de sertissage 1 peut être utilisé pour réunir entre eux un premier tronçon d'extrémité 5 appartenant à un premier fil 4 et un second tronçon d'extrémité 6 appartenant à un second fil 4 distinct du premier fil, de manière à réaliser une épissure qui permet de prolonger le premier fil 4 au moyen du second fil 5.

Toutefois, selon une variante préférentielle d'application, le poste de sertissage 1 sera utilisé pour réunir et fixer l'un à l'autre un premier tronçon d'extrémité 5 et un second tronçon d'extrémité 6 formant les deux extrémités longitudinales opposées d'un même fil 4, de sorte à refermer ainsi ledit fil 4 en anneau sur lui-même.

Plus préférentiellement, l'invention concernera une installation 100 de fabrication de tringles 9 destinées au renforcement de bandages, notamment de bandages pneumatiques, ladite installation 100 comprenant un poste de sertissage 1 selon l'invention pour fermer sur lui-même un fil 4 qui est constitutif d'une tringle 9.

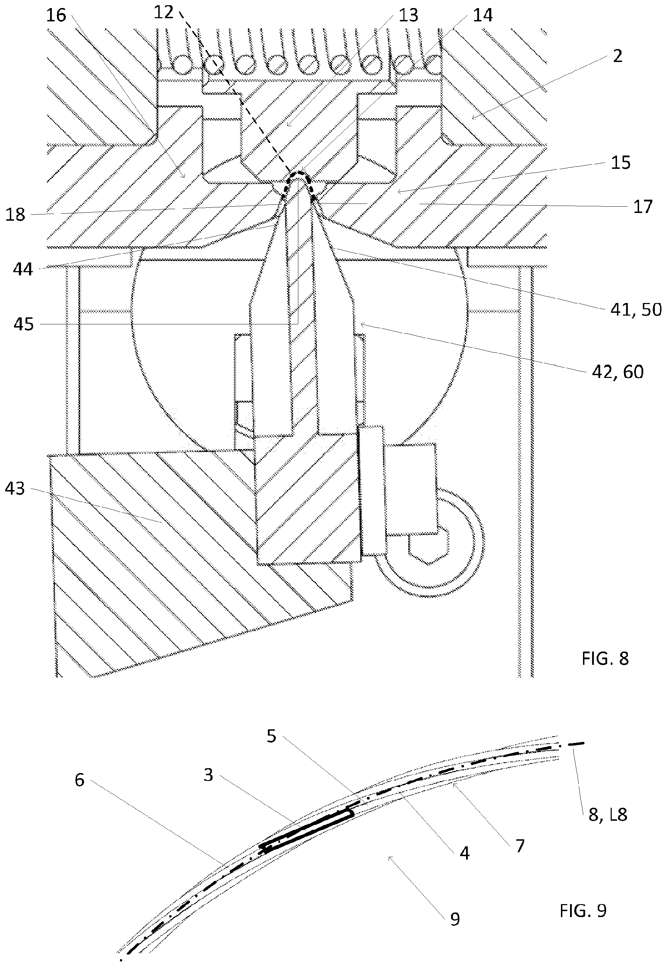

Plus particulièrement, tel que cela est visible sur la figure 9, la tringle 9 pourra être obtenue à partir d'un tore tressé qui comprend au moins un fil, dit « fil de tresse » 4, qui s'étend longitudinalement, d'un seul tenant, depuis un premier tronçon d'extrémité 5 jusqu'à un second tronçon d'extrémité 6 et qui est entrelacé en spires hélicoïdales 7 autour de, et le long de, une ligne génératrice L8 qui forme un anneau, de préférence circulaire, autour d'un axe principal qui correspond à l'axe central dudit tore tressé.

La pince de sertissage 2 sera alors agencée pour réunir et fixer l'un à l'autre le premier tronçon d'extrémité 5 et le second tronçon d'extrémité 6 en sertissant le manchon 3 sur lesdits tronçons d'extrémité 5, 6, de sorte à assurer la cohésion du tore tressé en un élément annulaire de tringle 9.

Ces tringles 9 seront typiquement destinées à des bandages pneumatiques dont les dimensions, qui correspondent au diamètre des jantes sur lesquelles se montent lesdits bandages, vont de 13 pouces à 24 pouces. Ces bandages pneumatiques pourront notamment être destinés à équiper des véhicules de tourisme. Bien entendu, l'invention est applicable à différents formats de bandage pneumatiques, notamment ceux destinés aux poids-lourds ou aux engins de génie civil.

Le fil 4 pourra être multibrin, c'est-à-dire formé d'un assemblage de plusieurs brins entrelacés, ou, de préférence monobrin, c'est-à-dire formé d'un seul brin réalisé d'un seul tenant.

Le matériau constitutif du brin, ou le cas échéant des brins, dudit fil 4 sera de préférence métallique, par exemple à base d'acier. Ceci étant, le fil 4 pourra être réalisé dans tout matériau approprié, y compris dans un polymère présentant une raideur en traction suffisante, ou dans un matériau composite de métal et polymère.

La section transverse du fil 4, de préférence constante le long dudit fil 4, pourra de préférence présenter un diamètre hors-tout compris entre 1,20 mm et 3,5 mm, et par exemple choisi parmi 1,30 mm, 1,55 mm, 1,75 mm 2,00 mm et 3,00 mm

La ligne génératrice L8 pourra être matérialisée par une âme 8 annulaire, de préférence métallique, qui pourra être monobrin ou multibrins, et qui servira avantageusement de support d'enroulement aux spires 7 selon lesquelles le fil de tresse 4 s'enroule en hélice autour de ladite ligne génératrice L8.

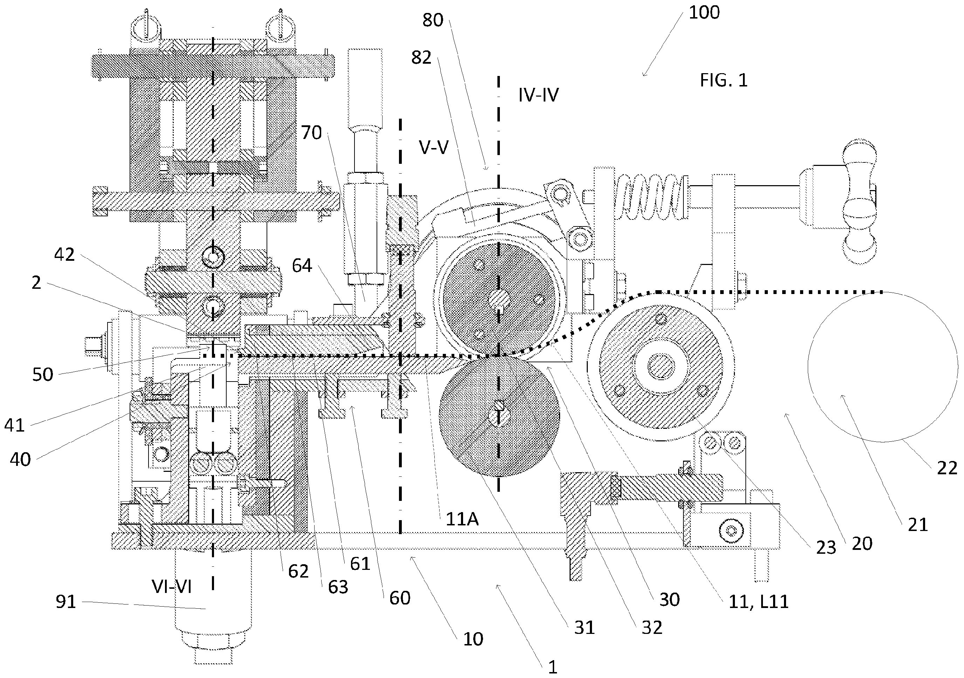

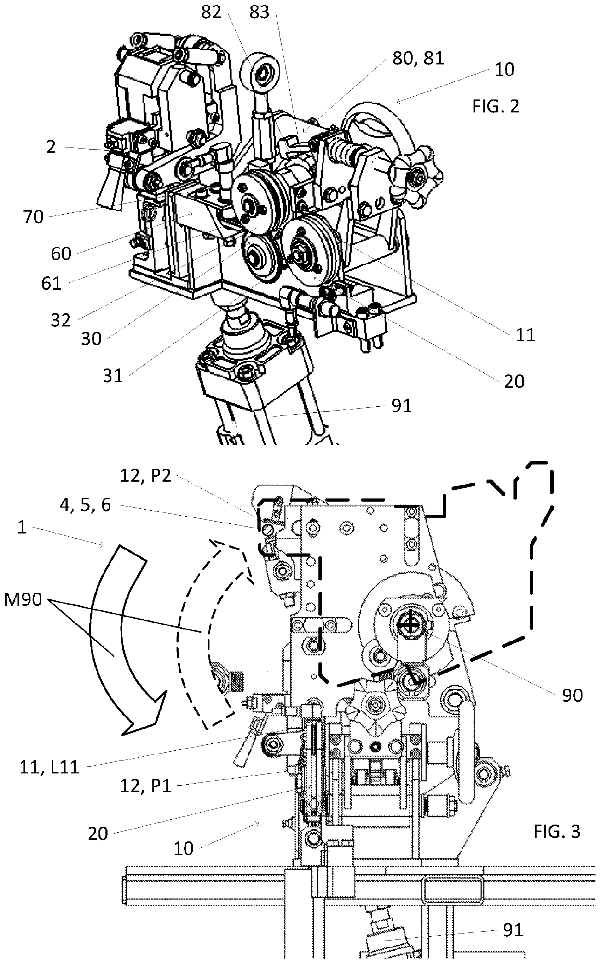

Selon l'invention, et tel que cela est notamment visible sur les figures 1 et 2, le poste de sertissage 1 comprend, pour alimenter la pince de sertissage 2, un sous-ensemble 10 de préparation de manchon, qui comporte un dispositif d'alimentation 20, un dispositif de conformation 30, un dispositif de coupe 40 et un outil de chargement 50.

Le dispositif d'alimentation 20 fournit un ruban 11 métallique et achemine ledit ruban 11 jusqu'au dispositif de conformation 30 qui est agencé pour déformer plastiquement ledit ruban 11 afin de conférer audit ruban une section transverse 11S incurvée concave, de sorte à obtenir un ruban préformé 11A, puis jusqu'au dispositif de coupe 40 qui est agencé pour sectionner un tronçon de longueur dudit ruban préformé 11A afin d'obtenir une préforme de manchon 12 que l'outil de chargement 50 vient placer au sein de la pince de sertissage 2, de sorte que ladite pince de sertissage 2 puisse venir appliquer et refermer par déformation plastique ladite préforme de manchon 12 en un manchon 3 autour des premier et second tronçons d'extrémité 5, 6 de fil 4.

Avantageusement, un tel sous-ensemble 10 permet de fabriquer in situ, directement sur le poste de sertissage 1, la quantité de manchons 3 unitaires exactement nécessaire aux opérations de sertissage à réaliser, à partir d'un ruban 11 continu qui est directement mis en forme et coupé autant de fois que nécessaire à la longueur appropriée.

L'invention permet ainsi de réduire significativement la durée de l'opération de sertissage, et d'éviter tout gaspillage de matière première.

A ce titre, l'utilisation d'un ruban 11 continu dont la longueur, de préférence supérieure à 50 fois, supérieure à 100 fois, voire supérieure à 1000 fois la longueur unitaire de la préforme de manchon 12, permet avantageusement de réaliser successivement de nombreuses préformes de manchon 12, sans qu'il soit nécessaire de réapprovisionner le poste de sertissage 1.

A titre indicatif, la longueur de la préforme de manchon 12, et donc la longueur du manchon 3 fini, sera comprise entre 15 mm et 50 mm, de préférence entre 20 mm et 40 mm, et par exemple entre 22 mm et 30 mm.

On notera également que, selon l'invention, l'opération de coupe qui confère à la préforme de manchon 12, et donc au manchon 3, sa longueur utile, intervient avantageusement après la conformation du ruban 11, en aval du dispositif de conformation 30 dans le sens de cheminement du ruban 11 à travers le sous-ensemble 10.

On peut ainsi avantageusement préformer le ruban 11, et donc le manchon 3, de manière « groupée » et simple, puis ensuite seulement débiter le ruban préformé 11A à l'unité pour obtenir les préformes de manchon 12.

En outre, il n'est alors pas nécessaire de retoucher ou d'ajuster de manière individuelle la forme desdites préformes de manchon 12 après l'opération de coupe et avant l'opération de sertissage.

En particulier, on notera que la forme incurvée concave conférée par le dispositif de conformation 30 permet avantageusement de façonner le creux de la préforme de manchon 12, creux dans lequel le fil 4 viendra se loger, lors de l'opération de sertissage, une fois ladite préforme de manchon 12 placée dans la pince de sertissage 2.

De la sorte, on limite les opérations de production, de transfert et de manipulation des préformes de manchon 12. On peut ainsi réaliser un sertissage de façon fiable, et avec un temps de cycle très réduit.

De même, on notera que la préparation de la préforme de manchon 12 s'effectue avantageusement en un seul passage, monodirectionnel, du ruban 11, d'amont en aval, depuis le dispositif d'alimentation 20 jusqu'au dispositif de coupe 40, et notamment en un seul passage à travers le dispositif de conformation 30, ce qui simplifie l'agencement et l'asservissement du poste de sertissage 1.

Par convention, on utilisera les termes « amont » et « aval » en considération du sens de cheminement normal du ruban 11 à travers le sous-ensemble de préparation, orienté du dispositif d'alimentation 20 vers le dispositif de coupe 40.

Le ruban 11 pourra être de préférence réalisé en acier, éventuellement recouvert d'un alliage à base de zinc ou d'un alliage à base de cuivre tel que le laiton, ou encore être réalisé dans un alliage suffisamment ductile à base de cuivre. Selon une possibilité préférée de mise en oeuvre, le ruban 11 pourra être réalisé dans un feuillard en acier doux laitonné.

Le ruban 11 présentera initialement une forme plate, avec une section de préférence sensiblement voire exactement rectangulaire.

De préférence, l'épaisseur du ruban 11 sera comprise entre 0,20 mm (soient 2 dixièmes de millimètre) et 0,50 mm (soient 5 dixièmes de millimètre), et plus préférentiellement entre 0,25 mm et 0,40 mm.

La largeur frontale du ruban 11, qui dépendra notamment du périmètre de section de fil 4 que l'on souhaitera couvrir avec le manchon 3, sera de préférence comprise entre 3 mm et 10 mm, préférentiellement entre 4 mm et 7 mm.

Le ruban 11 s'étend d'un seul tenant en longueur selon une direction longitudinale L11, qui part du dispositif d'alimentation 20, traverse le dispositif de conformation 30 et rejoint le dispositif de coupe 40, tel que cela est visible sur la figure 1.

De préférence, le dispositif de conformation 30 confère au ruban 11 une section transverse 11S en U, selon une ligne de pliage qui coïncide avec la direction longitudinale L11 dudit ruban 11.

De la sorte, le ruban préformé 11A présente de préférence une forme de gouttière.

On notera que le choix d'une ligne de pliage parallèle à, et de préférence confondue avec, la direction longitudinale L11 permet de préformer le ruban 11 en continu, sans avoir à couper au préalable ledit ruban 11, et à la volée, c'est-à-dire au fur et à mesure que le ruban 11 est acheminé à travers le dispositif de conformation 30, et plus globalement à travers le sous-ensemble 10 de préparation de manchon.

Un tel choix est particulièrement adapté à une conformation du ruban 11 par laminage de forme.

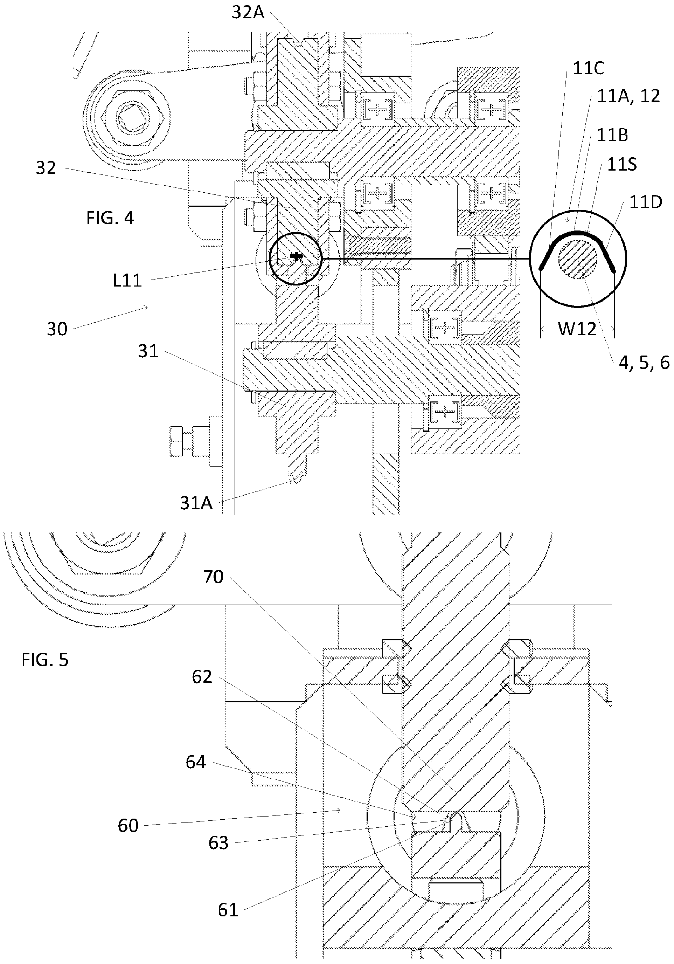

A ce titre, le dispositif de conformation 30 comprend de préférence, tel que cela est bien visible sur la figure 4, deux galets de conformation 31, 32 contrarotatifs entre lesquels est engagé le ruban 11 et qui sont pourvus respectivement d'une empreinte mâle 31A et d'une empreinte femelle 32A conjuguée qui correspondent à la forme de la section transverse 11S incurvée que l'on souhaite conférer au ruban 11.

La section transverse 11S en U, et par conséquent la section transverse de la préforme de manchon 3 qui est obtenue à partir du manchon préformé 11A, présente de préférence un fond arrondi 11B, correspondant à la ligne de pliage, et deux branches latérales 11C, 11D, qui vont de préférence en s'évasant à partir du fond 11B de sorte à présenter une ouverture angulaire croissante en direction de l'extérieur de la section transverse 11S, tel que cela est visible dans le médaillon attaché à la figure 4.

De préférence, chacune des empreintes 31A, 32A des galets de conformation 31, 32 présente une forme de révolution autour de l'axe de rotation de son galet de conformation 31, 32 respectif, par exemple une gorge annulaire pour l'empreinte femelle 32A, et un épaulement à pointe arrondie pour l'empreinte mâle 31A.

En outre, les axes de rotation des deux galets de conformation 31, 32 seront de préférence parallèles entre eux.

De préférence, la préforme de manchon 12 présente sur toute sa longueur une ouverture dont la largeur W12 est égale ou supérieure au plus grand diamètre du premier tronçon d'extrémité de fil 5 et du second tronçon d'extrémité de fil 6, tel que cela est schématisé sur la figure 4, de sorte que la pince de sertissage 2 peut venir appliquer la préforme de manchon 12 sur lesdits tronçons d'extrémité de fil 5, 6 par abord latéral, transversalement à la direction longitudinale desdits tronçons d'extrémité de fil 5, 6.

La préforme de manchon 12 forme ainsi en quelque sorte un manchon fendu, que la pince de sertissage 2 va pouvoir refermer et serrer sur les tronçons d'extrémité 5, 6 de fil 4 en rabattant les branches latérales 11C, 11D contre le périmètre de la section dudit fil 4, dans un secteur angulaire de ladite section du fil 4 qui est situé dans le demi-plan diamétralement opposé, par rapport au centre de la section du fil 4, au demi-plan qui contient le secteur angulaire du fil 4 contre lequel vient s'appliquer le fond 11B de la préforme de manchon 12.

Avantageusement, une telle approche latérale, transverse, est facile à mettre en oeuvre et aisément automatisable, notamment car elle dispense de devoir enfiler longitudinalement le manchon 3 sur chacun des tronçons d'extrémité 5, 6.

En outre, les dimensions de la préforme de manchon 12, et plus particulièrement la longueur cumulée du fond 11B et des branches latérales 11C, 11D de la section transverse 11S, c'est-à-dire la dimension de la préforme de manchon 12 qui correspond à la largeur frontale du ruban 11, sont avantageusement choisies de manière à ce que le manchon 3 qui résulte du pliage plastique de la préforme de manchon 12 sur elle-même enserre en son sein une seule section d'un fil 4, c'est-à-dire de manière à ce que le manchon 3 enveloppe une seule section de fil 4, et soit ainsi coaxial à chacun des tronçons d'extrémité 5, 6 unitaire dudit fil 4.

Ainsi, en particulier, dans le cas d'un tore tressé 3, qui comprend dans une même section droite de tore, plusieurs sections unitaires du fil de tresse 4 correspondant chacune à une spire 7 hélicoïdale, alors les dimensions de la préforme de manchon 12, et plus particulièrement la longueur cumulée du fond 11B et des branches latérales 11C, 11D de la section transverse 11S de ladite préforme de manchon 12, c'est-à-dire le périmètre que ladite préforme de manchon 12 peut couvrir autour de la direction longitudinale du fil de tresse 4 lorsque ladite préforme de manchon a été pliée sous sa forme définitive de manchon 3, correspondent de préférence à une fraction, typiquement 65 % à 100%, de préférence 70% à 99%, voire 75% à 95%, du périmètre d'une seule section unitaire du fil de tresse 4, de sorte que le manchon 3 contient finalement une seule section unitaire de fil de tresse 4, les autres sections unitaires du fil de tresse 4 appartenant à la même section droite du tore tressé se trouvant hors du manchon 3, tel que cela est notamment visible sur la figure 9.

En d'autres termes, le manchon 3 sera de préférence dimensionné de sorte à ne pas envelopper l'ensemble de la section du tore tressé, c'est-à-dire à ne pas envelopper l'ensemble des spires 7 du fil de tresse 4, mais seulement la section unitaire qui correspond à la jonction entre le premier et le second tronçon d'extrémité 5, 6.

On évite ainsi avantageusement de créer une surépaisseur de matière sur la tringle 9, et plus particulièrement sur la surface radialement externe de la tringle 9, ce qui permet à ladite tringle 9 de ne pas présenter de caractère abrasif vis-à-vis des nappes à base de caoutchouc, notamment la nappe carcasse, qui constituent l'enveloppe du bandage pneumatique.

On notera également que, de préférence, une fois la préforme de manchon 12 refermée en un manchon sur les tronçons d'extrémité 5, 6, et plus particulièrement sur une section unitaire du fil de tresse 4 correspondant à la section desdits tronçons d'extrémité 5, 6, les branches latérales 11C, 11D ne se chevauchent pas et de préférence ne se touchent pas bord à bord, c'est-à-dire que le manchon couvre moins de 100% de la circonférence de la section du fil 4. On évite ainsi de créer des surépaisseurs inutiles de matière.

A titre indicatif, la largeur frontale du ruban 11, considérée perpendiculairement à la direction longitudinale L Il, sera de préférence comprise entre 4 mm et 7 mm, comme indiqué plus haut, afin de couvrir typiquement entre 70% et 99% de la circonférence d'une section (unitaire) de fil 4.

On notera par ailleurs que, pour permettre de distinguer les tronçons d'extrémité 5, 6 du reste du tore tressé pendant l'opération de sertissage, le poste de sertissage 1 peut également être pourvu d'organes écarteurs (non représentés), tels que des palettes, qui sont agencés de manière à pouvoir venir engager les tronçons d'extrémité 5, 6 et faire saillir temporairement lesdits tronçons d'extrémité 5, 6 par flexion par rapport aux spires 7 constitutives du corps du tore tressé, de manière à placer les sections transverses correspondantes des tronçons d'extrémité 5, 6 à distance du corps du tore tressé, et à libérer ainsi, entre lesdits tronçons d'extrémité 5, 6 et le corps du tore tressé, le passage nécessaire à l'insertion et au pliage des branches latérales 11C, 11D de la préforme de manchon 12 autour de la section desdits tronçons d'extrémité 5, 6 du fil 4.

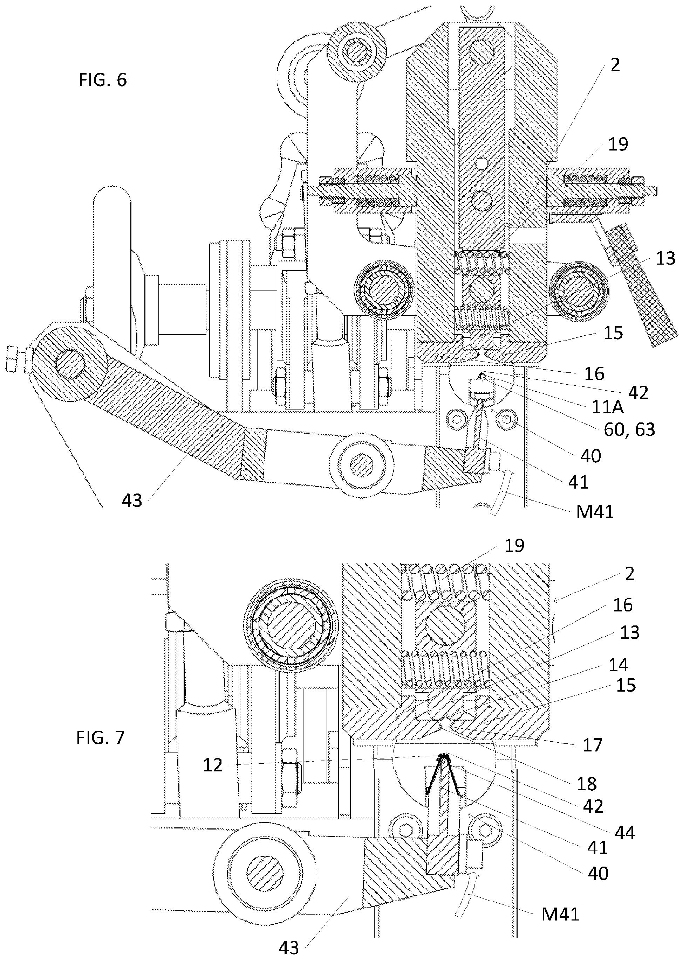

Tel que cela est visible notamment sur les figures 6, 7 et 8, la pince de sertissage 2 peut comprendre une pluralité de mors 13, 15, 16, comprenant un mors de fond 13 agencé pour recevoir, de préférence dans un logement arrondi 14, le fond 11B de la préforme de manchon 12, ainsi qu'un premier mors latéral 15 et un second mors latéral 16.

Le premier mors latéral 15 et le second mors latéral 16 sont agencés pour venir en prise respectivement avec la première branche latérale 11C et avec la seconde branche latérale 11D de la préforme de manchon 12, et pour se rapprocher l'un de l'autre, transversalement à la ligne moyenne du fil 4, de manière à rabattre l'une vers l'autre, par déformation plastique, ladite première branche latérale 11C et ladite seconde branche latérale 11D de la préforme de manchon 12, afin de refermer de manière enveloppante ladite préforme de manchon 12 sur la section dudit fil 4 et emprisonner ainsi les tronçons d'extrémité 5, 6 à l'intérieur du manchon 3.

Les mors latéraux 15, 16 pourront présenter toute forme et toute cinématique permettant d'accentuer la courbure, ici la concavité, de la préforme de manchon 12, et plus particulièrement des branches latérales 11C, 11D de celle-ci, par déformation plastique à l'encontre du fil 4, pour obtenir le manchon 3 fini.

Afin d'assurer le maintien de la préforme de manchon 12 au sein de la pince de sertissage 2 jusqu'à l'engagement de ladite pince de sertissage 2 sur le fil 4, les mors latéraux 15, 16 pourront être précontraints élastiquement l'un vers l'autre au moyen d'un ou plusieurs ressorts de suspension 19, et présenter des rebords anti-retour 17, 18 aptes à coopérer avec la préforme de manchon 12 par encliquetage, tel que cela est illustré sur la figure 8.

De préférence, la préforme de manchon 12 reposera de façon stable contre lesdits rebords anti-retour 17, 18 par les extrémités libres de ses branches latérales 11C, 11D, ce qui évitera toute chute de ladite préforme de manchon 12.

Bien entendu, on effectuera, lors de l'opération de sertissage, tout d'abord une fermeture de la pince de sertissage 2 par un rapprochement forcé des mors latéraux 15, 16, pour provoquer la fermeture de la préforme de manchon 12 et donc le sertissage du manchon 3, puis ensuite, une fois le manchon 3 effectivement serti sur le fil 4, une ouverture forcée de la pince de sertissage 2 par écartement des mors latéraux 15, 16, afin de libérer les tronçons d'extrémité 5, 6 désormais réunis par ledit manchon 3.

Ces mouvements forcés des mors latéraux 15, 16 pourront être effectués, le cas échéant à l'encontre du ressort de suspension 19, par tout organe de motorisation approprié, tel qu'un vérin ou un moteur électrique.

De préférence, tel que cela est schématisé sur la figure 1, le dispositif d'alimentation 20 comprend un dévidoir 21 pourvu d'un porte-bobine qui est agencé pour recevoir une bobine 22 contenant une réserve de ruban 11 et pour permettre le déroulage dudit ruban 11.

On pourra ainsi bénéficier d'une grande réserve de ruban 11 d'un seul tenant, qui confère une grande autonomie au poste de sertissage 1.

L'utilisation de bobines 22 interchangeables améliore les conditions de stockage du ruban 11 et facilite le réapprovisionnement du poste de sertissage 1.

A titre indicatif, la bobine 22 pourra contenir un ruban 11 dont la longueur est égale ou supérieure à 50 fois, à 100 fois, à 500 fois, voire égale ou supérieure à 1000 fois ou même à 4000 fois la longueur unitaire de la préforme de manchon 12, et par exemple comprise entre 5000 (cinq mille) fois et 20 000 (vingt mille) fois la longueur unitaire de la préforme de manchon 12.

Le dispositif d'alimentation 20 pourra de préférence comporter un rouleau de centrage 23, destiné à guider le ruban 11 vers le dispositif de conformation 30, en particulier lorsque ledit ruban 11 provient du déroulage d'une bobine 22.

A cet effet, tel que cela est visible sur la figure 2, le rouleau de centrage 23 pourra par exemple présenter une gorge annulaire à fond plat, dont la largeur est égale ou légèrement supérieure à la largeur frontale du ruban 11.

On assurera ainsi un guidage précis et stable du ruban 11, qui préserve notamment ledit ruban 11 des dommages par torsion, chute, ou bourrage.

De préférence, tel que cela est bien visible sur les figures 6 à 8, le dispositif de coupe 40 comprend un poinçon 41 mobile qui est agencé pour sectionner le ruban préformé 11A en réalisant un mouvement M41 de cisaillement à l'encontre d'une enclume 42 afin de prélever une préforme de manchon 12 dans ledit ruban préformé 11A.

De façon particulièrement préférentielle, ledit poinçon 41 mobile peut former également l'outil de chargement 50, en étant agencé pour, suite à l'opération de coupe par cisaillement, poursuivre son mouvement M41 et porter la préforme de manchon 12 jusqu'à engager ladite préforme de manchon 12 dans la pince de sertissage 2 positionnée en attente en vis-à-vis dudit poinçon 41, tel que cela est illustré sur la figure 8.

L'enclume 42 a pour fonction de guider le ruban préformé 11A qui entre dans le dispositif de coupe 40, et de fournir un appui audit ruban préformé 11A tandis que l'extrémité dudit ruban préformé 11A est placée en saillie longitudinalement sur la trajectoire du poinçon 41, de préférence perpendiculairement à ladite trajectoire du poinçon 41, d'une longueur égale à la longueur de la préforme de manchon 12 souhaitée.

Ainsi, le poinçon 41 peut accrocher la portion saillante du ruban préformé 11A (figure 7), cisailler celle-ci à l'encontre de l'enclume 42, puis porter la préforme de manchon 12 ainsi détachée du ruban 11 jusqu'à la pince de sertissage 2 (figure 8).

Le mouvement M41 de cisaillement comprend de préférence une composante verticale ascendante, tel que cela est illustré sur les figures 6 à 8.

Le cas échéant, le mouvement M41 du poinçon 41 peut être un mouvement de basculement ascendant, porté par un levier 43 correspondant.

Ici, la pince de sertissage 2 sera de préférence placée en attente au-dessus de l'enclume 42, dans le prolongement du mouvement M41 de cisaillement, avec ses mors latéraux 15, 16 suffisamment entre-ouverts pour permettre la pénétration du poinçon 41 coiffé de la préforme de manchon 12.

De préférence, lorsqu'il pénètre dans la pince de sertissage 2, le poinçon 41 écarte légèrement les mors latéraux 15, 16, par une action élastique à l'encontre du ressort 19, afin de franchir le goulet anti-retour formé par lesdits mors latéraux 15, 16, et plus particulièrement par les rebords anti-retour 17, 18 de ces derniers.

Les mors latéraux 15, 16 se referment ensuite partiellement, par retour élastique, ici sous l'action du ressort de suspension 19, de manière suffisante pour que lesdits mors latéraux 15, 16, et plus particulièrement les rebords 17, 18, agissent à la manière d'un cliquet anti-retour qui capture et retient la préforme de manchon 12 dans la pince 2, tout en laissant le poinçon 41 libre de se retirer, tel que cela est visible sur la figure 8.

Une fois la préforme de manchon 12 en place dans la pince de sertissage 12, le poinçon 41 est manoeuvré en retrait, ici redescendu, en attente de l'opération de coupe suivante.

De préférence, le poinçon 41 présente de préférence d'une part une pointe 44 qui possède une section sensiblement conjuguée à la section transverse 11S incurvée concave du ruban préformé 11A, de préférence une section sensiblement triangulaire vue en coupe dans un plan normal à la direction longitudinale L11, et d'autre part une arête de crête 45, formant le sommet de ladite pointe 44, et qui s'étend selon la direction longitudinale L 11 du ruban préformé 11A et vient prendre appui dans le creux du tronçon de longueur de ruban préformé 11A à détacher.

Une telle pointe 44 assure avantageusement un maintien efficace et stable de la portion de ruban préformé 11A destinée à former la préforme de manchon 12 aussi bien pendant l'opération de sectionnement par cisaillement, ce qui permet d'obtenir un cisaillement net qui évite d'endommager ou de déformer la préforme de manchon 12, que pendant l'opération de transfert de ladite préforme de manchon 12 jusqu'à la pince de sertissage 2, puisque ladite préforme de manchon 12 se trouve alors calée contre la pointe 44, en appui sur l'arête de crête 45 que ladite préforme de manchon 12 chevauche.

En outre, la pointe 44 favorise avantageusement, par effet de coin, l'écartement élastique des mors latéraux 15, 16 lorsque le poinçon 41 fait pénétrer et positionne la préforme de manchon 12 dans la pince de sertissage 2.

De préférence, le poste de sertissage 1 comprend un guide de redressement 60 pourvu d'un rail 61 et d'un contre-rail 62 tous deux rectilignes qui s'étendent entre le poste de conformation 30 et le poste de coupe 40, parallèlement à la direction longitudinale L11 du ruban 11, et qui définissent entre eux un passage de redressement 63 rectiligne dont la forme correspond à celle de la section transverse 11S incurvée du ruban préformé.

Tel que cela est visible sur la figure 5, le rail 61 et le contre-rail 62 présentent de préférence des formes complémentaires, en U, pour délimiter le passage de redressement 63. Le rail 61 présentera ainsi de préférence une section convexe, et le contre-rail 62 une section concave.

De préférence, le rail 61 et le contre-rail 62 seront étagés verticalement, le rail 61 formant un rail inférieur et le contre-rail 62 un rail supérieur.

Avantageusement, le guide de redressement 60 permet de garantir la rectitude du ruban préformé 11A lorsque celui-ci parvient au dispositif de coupe 40, et par conséquent la rectitude de la préforme de manchon 12, ce qui facilite notamment les opérations de coupe de ladite préforme 12 et de transfert de ladite préforme 12 vers la pince de sertissage 2, puis le maintien de ladite préforme de manchon 12 au sein de la pince de sertissage 2 jusqu'à l'opération de sertissage.

Plus particulièrement, le guide de redressement 60 aura la capacité de déformer plastiquement le ruban 11, par glissement dudit ruban 11 entre, et contre, le rail 61 et le contre-rail 62, dans la mesure nécessaire pour compenser une éventuelle tendance du ruban 11 à se courber en flexion, dans le sens de sa longueur, suite à son déroulement de la bobine 22 et/ou suite au laminage de forme que ledit ruban 11 subit dans le dispositif de conformation 30.

Bien entendu, le rail 61, le contre-rail 62, et plus spécifiquement le passage de redressement 63, formera un segment de droite d'une longueur suffisante pour obtenir l'effet de redressement souhaité, par exemple d'une longueur égale ou supérieure à 1,5 fois, de préférence égale ou supérieure à 2 fois la longueur unitaire de la préforme de manchon 12, et par exemple préférentiellement comprise entre 2 fois et 5 fois ladite longueur unitaire de la préforme de manchon 12.

Par ailleurs, dans la mesure où d'une part le ruban 11 est potentiellement sensible à un flambage en compression longitudinale, du fait des contraintes de frottement qui naissent du contact glissant dudit ruban 11 contre le rail 61 et le contre-rail 62, et où d'autre part les inventeurs ont constaté qu'il était préférable d'éviter un pliage plastique intempestif du ruban 11 par flambage, car un tel pliage peut rendre inutilisable le ruban 11 en faisant perdre audit ruban les propriétés de résistance mécanique requises pour son usage en tant que manchon 3, diverses solutions ont été envisagées pour limiter et/ou surveiller la survenance d'un tel phénomène de flambage, susceptible de générer ce que l'on appelle un « bourrage ».

A cet effet, on pourra notamment prévoir que l'entrée du guide de redressement 60, et notamment l'extrémité amont du rail 61 inférieur, voire chacune des deux extrémités amont du rail 61 inférieur et du contre-rail 62 supérieur, jouxte immédiatement la sortie des galets de conformation 31, 32, de manière à assurer un guidage immédiat du ruban 11 en sortie du dispositif de conformation 30, en limitant ainsi le parcours de « vol libre », c'est-à-dire non guidé par contact, du ruban préformé 11A entre ledit dispositif de conformation 30 et le guide de redressement 60.

Selon une possibilité de mise en oeuvre, le rail 61, ici le rail 61 inférieur, s'étendra de préférence en continu depuis la sortie du dispositif de conformation 30 jusqu'au dispositif de coupe 40, de sorte à guider précisément le ruban préformé 11A sur tout le chemin qui mène du dispositif de conformation 30 jusqu'au dispositif de coupe 40, et plus particulièrement jusqu'au rebord de l'enclume 42 utilisée pour cisailler le ruban préformé 11A.

Selon une autre possibilité de mise en oeuvre, on pourra utiliser à la fois un rail 61 long et un contre-rail 62 long, sensiblement d'égale longueur, qui couvrent chacun toute la distance qui sépare, le long de la direction longitudinale L Il, le dispositif de conformation 30 du dispositif de coupe 40.

Par ailleurs, l'entrée du guide de redressement 60 peut avantageusement être pourvue d'un détecteur d'engorgement 70, de préférence un détecteur inductif, qui permet de détecter un éventuel bourrage du ruban 11.

Ce détecteur d'engorgement 70 pourra par exemple être formé par un capteur de proximité, qui est agencé au-dessus du ruban 11, à distance transversalement de la trajectoire normalement empruntée par le ruban préformé 11A, de sorte que, en cas de bourrage, le flambage et donc le pliage en compression dudit ruban préformé 11A a pour effet de décaler une portion dudit ruban 11 transversalement par rapport à la trajectoire nominale dudit ruban, ici plus particulièrement a pour effet de décaler ledit ruban en hauteur, et donc de rapprocher le ruban 11 du détecteur 70, voire de faire entrer ledit ruban 11 en contact avec ledit détecteur 70, ce qui permettra de déclencher une alerte.

La fiabilité du guide de redressement 60, et plus globalement du sous-ensemble de préparation de manchons 10 et du poste de sertissage 1, s'en verra donc accrue.

Au besoin, afin de libérer de l'espace pour intégrer le détecteur d'engorgement 70, le contre-rail 62 pourra être plus court que le rail 61, et placé en retrait aval de celui-ci dans le sens d'avance longitudinale du ruban 11.

Par ailleurs, l'entrée du passage de redressement 63 formera de préférence un entonnoir, le contre-rail 62 pouvant à cet effet comprendre un chanfrein 64, éventuellement tronconique, qui converge vers le rail 61 opposé, tel que cela est visible sur la figure 1, de sorte à pouvoir au besoin diriger l'extrémité du ruban 11 vers le passage de redressement 63.

En outre, le rail 61 inférieur pourra alors déborder en saillie amont du contre-rail 62, de manière à pouvoir accueillir le ruban préformé 11A et le guider progressivement vers l'entrée du passage de redressement 63, tout en soutenant de préférence ledit ruban préformé 11A à l'aplomb du détecteur d'engorgement 70.

Ces dispositions contribueront à limiter les risques de survenance d'un bourrage du ruban 11 dans le guide de redressement 60,

De préférence, l'extrémité terminale du guide de redressement 60, par laquelle le ruban préformé 11A émerge en sortant du passage de redressement 63, et ici plus préférentiellement l'extrémité aval du contre-rail 62, forme l'enclume 42 qui retient le ruban préformé 11A à l'encontre du mouvement M41 de cisaillement effectué par le poinçon 41.

Plus particulièrement, l'enclume 42, ici l'extrémité terminale du guide de redressement, forme de préférence une surface plane, normale à la direction longitudinale L11 du ruban préformé 11A.

Le poinçon 41 peut ainsi venir raser ladite surface, voire glisser contre ladite surface, dans un mouvement M41 de cisaillement sensiblement perpendiculaire à ladite direction longitudinale L11, ce qui permet une coupe nette et précise.

En outre, en conférant au guide de redressement 60 un double rôle, de redresseur et d'enclume, on améliore la compacité du sous-ensemble 10.

Par ailleurs, le poste de sertissage 1 comprend de préférence un indexeur 80 qui est agencé pour faire avancer le ruban 11 pas à pas, chaque pas correspondant à une longueur prédéterminée égale à la longueur unitaire de la préforme de manchon 12 souhaitée.

Ledit indexeur 80 pourra avantageusement comprendre un mécanisme à cliquet 81, comprenant par exemple un levier cranté 82 coopérant avec une roue à rochet 83, tel que cela est visible sur la figure 2.

Le mécanisme à cliquet 81 sera par exemple couplé au dispositif de conformation 30, de manière à entraîner les galets de conformation 31, 32 en rotation sur un secteur angulaire dont la longueur d'arc correspond à la longueur de ruban 11 nécessaire à la confection d'une préforme de manchon 12.

On pourra bien entendu prévoir un dispositif de réglage permettant de choisir librement, dans une plage prédéterminée, la longueur de la préforme de manchon 2, et donc la longueur d'incrément dont on souhaite faire avancer le ruban 11 à chaque pas.

Avantageusement, l'indexeur 80 permettra de faire avancer séquentiellement le ruban 11, pour, au cours d'une première phase de mouvement, faire progresser le ruban 11 simultanément à travers le dispositif d'alimentation 20, le dispositif de conformation 30, le guide redresseur 60 et le dispositif de coupe 40, d'une longueur égale à la longueur de la préforme de manchon 12 souhaitée, afin de mettre ladite longueur de ruban 11 en saillie de l'enclume 42, sur la trajectoire du poinçon 41, puis, au cours d'une seconde phase d'arrêt, pour stopper la progression du ruban 11 pendant la durée qui est nécessaire d'une part à l'opération de coupe, pour permettre au poinçon 41 de sectionner le ruban 11 et d'amener la préforme de manchon 12 dans la pince de sertissage 2, et d'autre part à l'opération de sertissage.

Un tel cadencement du fonctionnement du poste de sertissage 1, et plus particulièrement du défilement incrémental du ruban 11, permettra de synchroniser les différents dispositifs 20, 30, 40, 50, 60 avec les phases de fonctionnement de la pince de sertissage 2 et d'optimiser le temps de cycle.

Selon une caractéristique préférentielle qui peut constituer une invention à part entière, la pince de sertissage 2 est montée sur une bascule 90 qui permet de commuter ladite pince de sertissage 2 entre une position de rechargement P1, dans laquelle ladite pince de sertissage 2 peut recevoir la préforme de manchon 12 issue du sous-ensemble 10 de préparation de manchon, tel que cela est représenté en trait plein sur la figure 3, et une position de travail P2, représentée en trait pointillé sur ladite figure 3, dans laquelle ladite pince de sertissage 2 est placée en vis-à-vis des tronçons d'extrémité 5, 6 de fil à raccorder.

De préférence, la permutation de la position de rechargement P1 à la position de travail P2 s'effectuera en tangage, autour d'un axe horizontal, de préférence par un mouvement de permutation M90 en quart de tour. On pourra prévoir des butées de fin de course pour limiter précisément le mouvement de permutation M90 afin d'indexer précisément les positions P1, P2.

De préférence, il en ira de même pour le mouvement de permutation réciproque, de la position de travail P2 à la position de rechargement P1, qui pourra s'opérer par retour en sens inverse.

Un tel agencement facilitera d'une part, dans une position de rechargement P1 dans laquelle la pince de sertissage 2 est orientée et ouverte vers le bas, tel que cela est illustré sur les figures 1 et 6, un rechargement de la pince de sertissage 2 par un mouvement ascendant du poinçon 41 comme décrit plus haut, et d'autre part, dans une position de travail P2 dans laquelle ladite pince est orientée horizontalement et ouverte latéralement, ici vers la gauche sur la figure 3, une approche latérale transverse des tronçons d'extrémité de fil 5, 6 à sertir, en particulier si le tore tressé repose sur un plateau horizontal qui est monté mobile en translation horizontale par rapport à la pince de sertissage 2.

De préférence, le poste de sertissage 1 peut comprendre un mécanisme de synchronisation qui couple l'indexeur 80 à la bascule 90, de sorte à synchroniser l'avance pas à pas du ruban 11 avec les mouvements de commutation M90 de la pince de sertissage 2.

Ici encore, on favorisera de la sorte une coordination efficace, parfaitement cadencée, du sous-ensemble 10, et donc du poste de sertissage 1.

En outre, on pourra plus particulièrement utiliser un même organe moteur 91, tel qu'un vérin 91, pour générer d'une part le mouvement de permutation M90 de la bascule 90 et, d'autre part, par des organes de transmission appropriés appartenant au mécanisme de synchronisation, le mouvement du mécanisme à cliquet 81 de l'indexeur 80.

On pourra ainsi gagner en compacité et en efficacité de fonctionnement.

En particulier, on pourra ainsi, pendant que la pince de sertissage 2 quitte sa position de rechargement P1 et gagne sa position de travail P2 , faire avancer le ruban 11 d'un incrément unitaire de longueur, afin de préparer en temps masqué une longueur de ruban préformé 11A prête à être sectionnée, que l'on place en attente de coupe en faisant sortir l'extrémité du ruban préformé 11A du guide redresseur 60, en saillie longitudinale de l'enclume 42.

Ainsi, dès le retour de la pince de sertissage 2 dans sa position de rechargement P1, pour le cycle de sertissage suivant, le poinçon 41 pourra immédiatement couper une nouvelle préforme de manchon 12 et la charger au sein de ladite pince de sertissage 2.

On notera que l'un, l'autre, ou l'ensemble des mouvements nécessaires au fonctionnement du sous-ensemble 10 de préparation de manchon, et plus globalement du poste de sertissage 1, pourront être motorisés par tout moyen approprié, et de préférence pilotés et coordonnés de manière automatique par une unité de commande appropriée, de préférence électronique.

Par ailleurs, la présente demande divulgue aussi un procédé de préparation de manchon, un procédé de sertissage correspondant, et plus particulièrement l'application d'un tel procédé au manchonnage de tringles 9 destinées à renforcer des bandages pneumatiques.

## Revendications

1. Poste de sertissage (1) comprenant une pince de sertissage (2) agencée pour venir sertir un manchon (3) autour d'un premier tronçon d'extrémité (5) d'un fil (4) et d'un second tronçon d'extrémité (6) d'un fil (4) afin de réunir et fixer l'un à l'autre lesdits premier et second tronçons d'extrémité (5, 6), ledit poste de sertissage étant **caractérisé en ce qu'**il comprend un sous-ensemble (10) de préparation de manchon qui comporte un dispositif d'alimentation (20) qui fournit un ruban (11) métallique et qui achemine ledit ruban jusqu'à un dispositif de conformation (30) agencé pour déformer plastiquement ledit ruban (11) afin de conférer audit ruban une section transverse (11S) incurvée concave, de sorte à obtenir un ruban préformé (1 IA), puis jusqu'à un dispositif de coupe (40) qui est agencé pour sectionner un tronçon de longueur dudit ruban préformé (11A) afin d'obtenir une préforme de manchon (12) qu'un outil de chargement (50) vient placer au sein de la pince de sertissage (2), de sorte que ladite pince de sertissage (2) puisse venir appliquer et refermer par déformation plastique ladite préforme de manchon (12) en un manchon (3) autour des premier et second tronçons d'extrémité (5, 6) de fil.

2. Poste de sertissage selon la revendication 1 **caractérisé en ce que** le dispositif de coupe (40) comprend un poinçon (41) mobile qui est agencé pour sectionner le ruban préformé (11A) en réalisant un mouvement (M41) de cisaillement à l'encontre d'une enclume (42) afin de prélever une préforme de manchon (12) dans ledit ruban préformé (11A), et **en ce que** ledit poinçon (41) mobile forme également l'outil de chargement (50), en étant agencé pour, suite à l'opération de coupe par cisaillement, poursuivre son mouvement et porter la préforme de manchon (12) jusqu'à engager ladite préforme de manchon dans la pince de sertissage (2) positionnée en attente en vis-à-vis dudit poinçon (41).

3. Poste de sertissage selon la revendication 2 **caractérisé en ce que** le poinçon (41) présente une pointe (44) qui possède une section sensiblement conjuguée à la section transverse (11S) incurvée concave du ruban préformé (11A) et une arête de crête (45) qui s'étend selon la direction longitudinale (L11) du ruban préformé (11A) et vient prendre appui dans le creux du tronçon de longueur de ruban préformé (11A) à détacher.

4. Poste de sertissage selon l'une des revendications précédentes **caractérisé en ce que** le dispositif de conformation (30) comprend deux galets de conformation (31, 32) contrarotatifs entre lesquels est engagé le ruban (11) et qui sont pourvus respectivement d'une empreinte mâle (31A) et d'une empreinte femelle (32A) conjuguées qui correspondent à la forme de la section transverse (11S) incurvée que l'on souhaite conférer au ruban (11).

5. Poste de sertissage selon l'une des revendications précédentes **caractérisé en ce que** le dispositif d'alimentation (20) comprend un dévidoir (21) pourvu d'un porte-bobine agencé pour recevoir une bobine (22) contenant une réserve de ruban (11) et pour permettre le déroulage dudit ruban (11).

6. Poste de sertissage selon l'une des revendications précédentes **caractérisé en ce qu'**il comprend un guide de redressement (60) pourvu d'un rail (61) et d'un contre-rail (62) rectilignes qui s'étendent entre le poste de conformation (30) et le poste de coupe (40), parallèlement à la direction longitudinale (L11) du ruban, et qui définissent entre eux un passage de redressement (63) rectiligne dont la forme correspond à celle de la section transverse (11S) incurvée du ruban préformé (11A).

7. Poste de sertissage selon la revendication 6 et l'une des revendications 2 ou 3 **caractérisé en ce que** l'extrémité terminale du guide de redressement (60), par laquelle le ruban préformé (11A) émerge en sortant du passage de redressement (63), forme l'enclume (42) qui retient le ruban préformé (11A) à l'encontre du mouvement (M41) de cisaillement effectué par le poinçon (41).

8. Poste de sertissage selon la revendication 6 ou 7 **caractérisé en ce que** l'entrée du guide de redressement (60) est pourvue d'un détecteur d'engorgement (70), de préférence un détecteur inductif, qui permet de détecter un éventuel bourrage du ruban (11).

9. Poste de sertissage selon l'une quelconque des revendications précédentes **caractérisé en ce qu'**il comprend un indexeur (80) agencé pour faire avancer le ruban (11) pas à pas, chaque pas correspondant à une longueur prédéterminée égale à la longueur unitaire de la préforme de manchon (12) souhaitée.

10. Poste de sertissage selon l'une quelconque des revendications précédentes **caractérisé en ce que** la pince de sertissage (2) est montée sur une bascule (90) qui permet de commuter ladite pince de sertissage entre une position de rechargement (P1), dans laquelle ladite pince de sertissage (2) peut recevoir la préforme de manchon (12) issue du sous-ensemble (10) de préparation de manchon, et une position de travail (P2), dans laquelle ladite pince de sertissage (2) est placée en vis-à-vis des tronçons d'extrémité (5, 6) de fil à raccorder.

11. Poste de sertissage selon les revendications 9 et 10 **caractérisé en ce qu'**il comprend un mécanisme de synchronisation qui couple l'indexeur (80) à la bascule (90), de sorte à synchroniser l'avance pas à pas du ruban (11) avec les mouvements de commutation de la pince de sertissage (2).

12. Poste de sertissage selon l'une quelconque des revendications précédentes **caractérisé en ce que** la préforme de manchon (12) présente sur toute sa longueur une ouverture dont la largeur (W12) est égale ou supérieure au plus grand diamètre du premier tronçon d'extrémité (5) de fil et du second tronçon d'extrémité (6) de fil, de sorte que la pince de sertissage (2) peut venir appliquer la préforme de manchon (12) sur lesdits tronçons d'extrémité (5, 6) de fil par abord latéral, transversalement à la direction longitudinale desdits tronçons d'extrémité de fil (5, 6).

13. Installation (100) de fabrication de tringles (9) destinées au renforcement de bandages, notamment de bandages pneumatiques, **caractérisée en ce qu'**elle comprend un poste de sertissage (1) selon l'une des revendications précédentes pour fermer sur lui-même un fil (4) constitutif d'une tringle (9).

## Patentansprüche

1. Crimpstation (1), die eine Crimpzange (2) beinhaltet, die dazu eingerichtet ist, eine Hülse (3) um einen ersten Endabschnitt (5) eines Drahtes (4) und einen zweiten Endabschnitt (6) eines Drahtes (4) zu crimpen, um den ersten und den zweiten Endabschnitt (5, 6) zu vereinen und aneinander zu befestigen, wobei die Crimpstation **dadurch gekennzeichnet ist, dass** sie eine Unterbaugruppe (10) zur Hülsenvorbereitung beinhaltet, die eine Zuführvorrichtung (20) umfasst, die ein Metallband (11) bereitstellt und das Band bis zu einer Formgebungsvorrichtung (30), die dazu eingerichtet ist, das Band (11) plastisch zu verformen, um dem Band einen konkaven gekrümmten Querschnitt (11S) zu verleihen, um ein vorgeformtes Band (11A) zu erhalten, und dann bis zu einer Schneidvorrichtung (40) transportiert, die dazu eingerichtet ist, einen Längenabschnitt des vorgeformten Bandes (11A) abzuteilen, um eine Hülsenvorform (12) zu erhalten, die von einem Ladewerkzeug (50) in die Crimpzange (2) eingelegt wird, sodass die Crimpzange (2) die Hülsenvorform (12) anlegen und durch plastische Verformung als eine Hülse (3) um den ersten und den zweiten Drahtendabschnitt (5, 6) schließen kann.

2. Crimpstation nach Anspruch 1, **dadurch gekennzeichnet, dass** die Schneidvorrichtung (40) einen beweglichen Stempel (41) beinhaltet, der dazu eingerichtet ist, durch das Durchführen einer Scherbewegung (M41) gegen einen Amboss (42) das vorgeformte Band (11A) abzuteilen, um dem vorgeformten Band (11A) eine Hülsenvorform (12) zu entnehmen, und dass der bewegliche Stempel (41) ferner das Ladewerkzeug (50) bildet, indem er dazu eingerichtet ist, im Anschluss an den Schneidvorgang durch Scherung seine Bewegung fortzusetzen und die Hülsenvorform (12) so weit zu befördern, bis die Hülsenvorform in der Crimpzange (2), die sich gegenüber dem Stempel (41) in Wartestellung befindet, platziert ist.

3. Crimpstation nach Anspruch 2, **dadurch gekennzeichnet, dass** der Stempel (41) eine Spitze (44), die einen dem konkaven gekrümmten Querschnitt (11S) des vorgeformten Bandes (11A) im Wesentlichen entsprechenden Querschnitt besitzt, und eine Gratkante (45), die sich gemäß der Längsrichtung (L11) des vorgeformten Bandes (11A) erstreckt und in der Mulde des abzutrennenden Längsabschnitts des vorgeformten Bandes (11A) zu liegen kommt, aufweist.

4. Crimpstation nach einem der vorhergehenden Ansprüche, **dadurch gekennzeichnet, dass** die Formgebungsvorrichtung (30) zwei gegenläufige Formgebungsrollen (31, 32) beinhaltet, zwischen denen das Band (11) gehalten wird und die über eine männliche Prägung (31A) bzw. eine weibliche Prägung (32A) verfügen, die zusammenwirken und der Form des gekrümmten Querschnitts (11S) entsprechen, die dem Band (11) verliehen werden soll.

5. Crimpstation nach einem der vorhergehenden Ansprüche, **dadurch gekennzeichnet, dass** die Zuführvorrichtung (20) eine Haspel (21) beinhaltet, die über einen Spulenträger verfügt, der dazu eingerichtet ist, eine Spule (22), die eine Bandreserve (11) enthält, aufzunehmen und das Abrollen des Bandes (11) zu gestatten.

6. Crimpstation nach einem der vorhergehenden Ansprüche, **dadurch gekennzeichnet, dass** sie eine Richtführung (60) beinhaltet, die über eine geradlinige Schiene (61) und eine geradlinige Gegenschiene (62) verfügt, die sich parallel zu der Längsrichtung (L11) des Bandes zwischen der Formgebungsstation (30) und der Schneidstation (40) erstrecken und zwischen sich einen geradlinigen Richtdurchgang (63) definieren, dessen Form der Form des gekrümmten Querschnitts (11S) des vorgeformten Bandes (11A) entspricht.

7. Crimpstation nach Anspruch 6 und einem der Ansprüche 2 oder 3, **dadurch gekennzeichnet, dass** das Abschlussende der Richtführung (60), an dem das vorgeformte Band (11A) austritt, wenn es den Richtdurchgang (63) verlässt, den Amboss (42) bildet, der das vorgeformte Band (11A) entgegen der durch den Stempel (41) ausgeführten Scherbewegung (M41) hält.

8. Crimpstation nach Anspruch 6 oder 7, **dadurch gekennzeichnet, dass** der Eintritt der Richtführung (60) über einen Verstopfungsdetektor (70), vorzugsweise einen induktiven Detektor, verfügt, der es gestattet, einen möglichen Stau des Bandes (11) zu detektieren.

9. Crimpstation nach einem beliebigen der vorhergehenden Ansprüche, **dadurch gekennzeichnet, dass** sie einen Indexierer (80) beinhaltet, der dazu eingerichtet ist, das Band (11) schrittweise voranzubringen, wobei jeder Schritt einer vorbestimmten Länge entspricht, die gleich der Einheitslänge der gewünschten Hülsenvorform (12) ist.

10. Crimpstation nach einem beliebigen der vorhergehenden Ansprüche, **dadurch gekennzeichnet, dass** die Crimpzange (2) auf einer Wippe (90) montiert ist, die das Hin- und Herbewegen der Crimpzange zwischen einer Neubeladungsposition (P1), in der die Crimpzange (2) die Hülsenvorform (12), die von der Unterbaugruppe (10) zur Hülsenvorbereitung kommt, aufnehmen kann, und einer Arbeitsposition (P2), in der die Crimpzange (2) gegenüber den zu verbindenden Drahtendabschnitten (5, 6) platziert ist, gestattet.

11. Crimpstation nach den Ansprüchen 9 und 10, **dadurch gekennzeichnet, dass** sie einen Synchronisationsmechanismus beinhaltet, der den Indexierer (80) mit der Wippe (90) koppelt, um das schrittweise Voranbringen des Bandes (11) mit den Hinund Herbewegungen der Crimpzange (2) zu synchronisieren.

12. Crimpstation nach einem beliebigen der vorhergehenden Ansprüche, **dadurch gekennzeichnet, dass** die Hülsenvorform (12) über ihre gesamte Länge eine Öffnung aufweist, deren Breite (W12) gleich dem größten Durchmesser des ersten Drahtendabschnitts (5) und des zweiten Drahtendabschnitts (6) oder größer ist, sodass die Crimpzange (2) die Hülsenvorform (12) durch seitliches Annähern quer zu der Längsrichtung der Drahtendabschnitte (5, 6) auf den Drahtendabschnitten (5, 6) anlegen kann.

13. Anlage (100) zur Herstellung von Wulsten (9), die zur Verstärkung von Reifen, insbesondere Luftreifen, bestimmt sind, **dadurch gekennzeichnet, dass** sie eine Crimpstation (1) nach einem der vorhergehenden Ansprüche beinhaltet, um einen Draht (4), der einen Wulst (9) bildet, in sich selbst zu schließen.

## Claims

1. Crimping station (1) comprising a crimping tool (2) designed to crimp a sleeve (3) around a first end portion (5) of a thread (4) and around a second end portion (6) of a thread (4) in order to join and fix together said first and second end portions (5, 6), said crimping station being **characterized in that** it comprises a sleeve preparation subassembly (10) which has a feed device (20) that supplies a metal strip (11) and conveys said strip as far as a shaping device (30) designed to plastically deform said strip (11) in order to give said strip a concave curved cross section (11S), so as to obtain a preformed strip (11A), and then as far as a cutting device (40) which is designed to sever a portion of length of said preformed strip (11A) in order to obtain a sleeve preform (12) that a loading tool (50) places within the crimping tool (2), such that said crimping tool (2) can press on and close up said sleeve preform (12), by plastic deformation, to form a sleeve (3) around the first and second thread end portions (5, 6).

2. Crimping station according to Claim 1, **characterized in that** the cutting device (40) comprises a mobile punch (41) which is designed to sever the preformed strip (11A) by effecting a shearing movement (M41) counter to an anvil (42) in order to remove a sleeve preform (12) from said preformed strip (11A), and **in that** said mobile punch (41) also forms the loading tool (50) **in that** it is designed, following the shearing cutting operation, to continue its movement and carry the sleeve preform (12) until said sleeve preform is engaged in the crimping tool (2) positioned on standby opposite said punch (41).

3. Crimping station according to Claim 2, **characterized in that** the punch (41) has a point (44) which has a section that substantially matches the concave curved cross section (11S) of the preformed strip (11A), and a peak ridge (45) that extends in the longitudinal direction (L11) of the preformed strip (11A) and comes to bear in the recess of the portion of length of the preformed strip (11A) to be detached.

4. Crimping station according to one of the preceding claims, **characterized in that** the shaping device (30) comprises two counter-rotating shaping rollers (31, 32) between which the strip (11) is engaged and which are provided respectively with a male impression (31A) and with a matching female impression (32A) which correspond to the shape of the curved cross section (11S) intended to be conferred on the strip (11).

5. Crimping station according to one of the preceding claims, **characterized in that** the feed device (20) comprises a pay-off device (21) provided with a reel holder designed to receive a reel (22) containing a stock of strip (11) and to allow said strip (11) to be unwound.

6. Crimping station according to one of the preceding claims, **characterized in that** it comprises a straightening guide (60) provided with a rectilinear rail (61) and a rectilinear counterpart rail (62) which extend between the shaping station (30) and the cutting station (40), parallel to the longitudinal direction (L11) of the strip, and which define, between one another, a rectilinear straightening passage (63), the shape of which corresponds to that of the curved cross section (11S) of the preformed strip (11A).

7. Crimping station according to Claim 6 and either of Claims 2 and 3, **characterized in that** the terminal end of the straightening guide (60), through which the preformed strip (11A) emerges on leaving the straightening passage (63), forms the anvil (42) which retains the preformed strip (11A) counter to the shearing movement (M41) effected by the punch (41).

8. Crimping station according to Claim 6 or 7, **characterized in that** the inlet of the straightening guide (60) is provided with a blockage detector (70), preferably an inductive detector, which makes it possible to detect any jamming of the strip (11).

9. Crimping station according to any one of the preceding claims, **characterized in that** it comprises an indexer (80) designed to move the strip (11) forward in a stepwise manner, each step corresponding to a predetermined length equal to the individual length of the sleeve preform (12) that is desired.

10. Crimping station according to any one of the preceding claims, **characterized in that** the crimping tool (2) is mounted on a rocker (90) which makes it possible to switch said crimping tool between a reloading position (P1), in which said crimping tool (2) can receive the sleeve preform (12) from the sleeve preparation subassembly (10), and a working position (P2), in which said crimping tool (2) is placed opposite the thread end portions (5, 6) to be joined together.

11. Crimping station according to Claims 9 and 10, **characterized in that** it comprises a synchronization mechanism which couples the indexer (80) to the rocker (90) so as to synchronize the stepwise forward movement of the strip (11) with the switching movements of the crimping tool (2).

12. Crimping station according to any one of the preceding claims, **characterized in that** the sleeve preform (12) has, along its entire length, an opening of which the width (W12) is equal to or greater than the largest diameter of the first thread end portion (5) and of the second thread end portion (6), such that the crimping tool (2) can press the sleeve preform (12) on said thread end portions (5, 6) by lateral approach, transversely to the longitudinal direction of said thread end portions (5, 6).

13. Installation (100) for manufacturing bead wires (9) intended to reinforce tyres, in particular pneumatic tyres, **characterized in that** it comprises a crimping station (1) according to one of the preceding claims for closing on itself a constituent thread (4) of a bead wire (9).
